# EUROPÄISCHE PATENTSCHRIFT

(11) **EP 0 845 719 B1**
(45) Veröffentlichungstag und Bekanntmachung des Hinweises auf die Patenterteilung: **30.08.2000**
(21) Anmeldenummer: 97118933.7
(22) Anmeldetag: 30.10.1997
(51) Int. Cl.: G05B 9/02, B60T 17/18, H02J 7/00, G08B 29/18

(54) **Anordnung zur Prüfung der Betriebssicherheit von Systemen, die elektrochemische Energiespeicher enthalten**
Arrangement for testing safe operation of systems comprising electrochemical energy storage means
Dispositif pour tester la sécurité de fonctionnement de systèmes comprenant des accumulateurs d'énergie électrochimiques

(30) Priorität: 27.11.1996 DE 19649105
(43) Veröffentlichungstag der Anmeldung: 03.06.1998
(73) Patentinhaber: VB Autobatterie GmbH, 30419 Hannover (DE)
(72) Erfinder: Meissner, Eberhard, Dr., 65719 Hofheim (DE)
(74) Vertreter: Kaiser, Dieter Ralf, Dipl.-Ing.

(56) Entgegenhaltungen:
- EP-A- 0 743 534
- WO-A-96/16451
- DE-A- 4 219 555
- US-A- 3 899 732
- US-A- 5 349 535
- US-A- 5 546 317

## Beschreibung

Gegenstand der Erfindung ist eine Anordnung zur Prüfung der Betriebssicherheit von Systemen, die einen elektrochemischen Energiespeicher enthalten, der zumindest zeitweise die elektrische Energie zur Durchführung eines Sicherungsvorganges liefert.

Viele Sicherheitssysteme werden elektrisch betrieben. Die elektrische Energie zur Durchführung, Steuerung oder Regelung des Sicherungsvorgangs wird dabei meist ganz oder teilweise, zumindest aber unter bestimmten Betriebsbedingungen, aus einem elektrochemischen Energiespeicher bezogen. Diese elektrochemischen Energiespeicher sind daher sicherheitsrelevante Teile für die vom Sicherheitssystem gesicherte Anlage.

Eine Anordnung zur Prüfung der Betriebssichereit von Systemen gemäß dem Oberbegriff des Anspruchs 1 ist aus der internationalen Patentanmeldung WO 96/16451 bekannt.

Es ist weiters bekannt, beispielsweise aus der US-PS 3899732, den Energieinhalt von Batterien, die Feuermelder versorgen, zu überprüfen. Dabei wird aus der Differenz der Spannung der unbelasteten Batterie und der Spannung der belasteten Batterie ein Überwachungssignal und gebenenfalls ein Alarmsignal abgeleitet.

Bestimmte Sicherheitssysteme haben besondere Bedeutung für die Betriebssicherheit zum Schutz von materiellen Werten und der Gesundheit von Menschen, so daß auch an die für ihren Betrieb notwendigen Energiespeicher erhöhte Anforderungen gestellt werden müssen. Diese elektrochemischen Energiespeicher müssen daher regelmäßig überprüft werden.

Ein Beispiel für ein derartiges Sicherheitssystem ist ein Bremssystem für Fahrzeuge, dem die für den Bremsvorgang notwendige Energie als elektrischer Strom aus einem elektrochemischen Energiespeicher zugeführt wird. Aber auch eine Vielzahl von anderen Anwendungen, bei denen lediglich Steuerung und Regelung des Sicherheitssystems elektrisch erfolgt, erfordern Maßnahmen zur Sicherstellung der Verwendung eines geeigneten elektrochemischen Energiespeichers, um die Betriebssicherheit unter allen Umständen zu gewährleisten.

Der Erfindung liegt daher die Aufgabe zugrunde, bei einem Sicherheitssystem den zur Bereitstellung der elektrischen Energie notwendigen Energiespeicher dahingehend zu überprüfen, ob er von geeigneter Bauart und Leistungsfähigkeit ist, ob er noch eine ausreichende Lebensdauer besitzt, oder ob er beispielsweise unzulässigen Betriebszuständen ausgesetzt war, d.h. ganz allgemein, dessen fortlaufende Eignung zur Durchführung des Sicherheitsvorgangs zu überprüfen.

Diese Aufgabe wird erfindungsgemäß bei einer Anordnung gemäß dem Oberbegriff des Anspruchs 1 durch die im Kennzeichnen dieses Anspruchs angegebenen Merkmale gelöst. Die Unteransprüche beschreiben vorteilhafte Ausgestaltungen der Anordnung.

Erfindungsgemäß enthält die Anordnung einen elektrochemischen Energiespeicher, der mit einem mit ihm festverbundenen Kennungsträger versehen ist, über den im System die Kenngrößen und die Eignung des Energiespeichers überprüfbar sind. Anhand dieses Kennungsträgers sind Identität und/oder Bauart und/oder elektrische Kenngrößen des elektrochemischen Energiespeichers regelmäßig überprüfbar, und damit ist feststellbar, ob dieser Energiespeicher für den Betrieb oder die Fortsetzung des Betriebs der Anordnung geeignet ist.

Nur wenn bei einer solchen Überprüfung Übereinstimmung mit vorgegebenen Werten gegeben ist, arbeitet das System normal, anderenfalls werden im System Maßnahmen ausgelöst, beispielsweise wird an den Betreiber ein Alarmsignal gegeben oder es erfolgt eine vorsorgliche Stillegung der Anlage.

Insbesondere ist eine erfindungsgemäße Anordnung ein Sicherheitssystem für schienengebundene oder nichtschienengebundene Fahrzeuge, insbesondere für Kraftfahrzeuge und dabei insbesondere für Fahrzeuge, die ein Bremssystem enthalten, welches aus einem elektrochemischen Energiespeicher gespeist wird.

Ein elektrisches Bremssystem besitzt erhebliche technische Vorzüge, wie insbesondere einfaches Ansprechen, einfache Regelungsmöglichkeiten, und in ein elektrisches Bremssystem können beispielsweise ABS und ASR praktisch automatisch integriert werden. Dennoch muß auch bei einem solchen elektrischen Betriebssystem der gleiche Sicherheitsstandard wie bei heutigen hydraulischen und pneumatischen Bremssystemen erreicht werden. Daher muß der elektrische Energiespeicher die Energieversorgung zuverlässig übernehmen, wenn andere elektrische Energiequellen wie der vom Verbrennungsmotor betriebene Generator wegen Abschaltens oder Ausfalls des Verbrennungsmotors oder wegen Defekts des Generators nicht zur Verfügung stehen.

Der mit dem elektrochemischen Energiespeicher festverbundene Kennungsträger enthält elektrische oder elektronische Bauteile. Er ist insbesondere ein elektronischer Speicherbaustein. Dessen Kennung wird vom System durch ein Datenbussystem abgefragt und der Kennungsträger enthält zumindest eine der folgenden Informationen:
a) Hersteller des elektrochemischen Speichersystems
b) Produktkennung des elektrochemischen Speichersystems
c) Fertigungsdatum und/oder Inbetriebnahmedatum des elektrochemischen Speichersystems
d) Ende der zulässigen Gebrauchsdauer des elektrochemischen Speichersystems
e) Termin zur Überprüfung des elektrochemischen Speichersystems
f) Angaben zur zulässigen Betriebstemperatur des elektrochemischen Speichersystems
g) Elektrische Kenndaten des elektrochemischen Speichersystems, wie beispielsweise Betriebsspannung, Speicherkapazität, Innenwiderstand etc.
h) Abhängigkeit elektrischer Kenndaten von Temperatur, Ladezustand, Gebrauchsdauer
i) Produktkennung von Sicherheitssystemen, die mit dem elektrochemischen Speichersystem betrieben werden können.

Darüber hinaus enthält der Kennungsträger vorteilhaft eine Codierung, die die Kompatibilität des elektrochemischen Speichersystems mit dem jeweiligen Sicherheitssystems dokumentiert. Diese Codierung kann, beispielsweise beim Einbau des Speichersystems in ein Fahrzeug, durch eine dazu autorisierte Stelle erfolgen, beispielsweise durch den Hersteller des Fahrzeugs selbst oder durch eine von ihm beauftragte Werkstatt, oder eine Kfz-Zulassungsstelle.

Diese Codierung kann gegebenenfalls nach der Herstellung des elektrochemischen Energiespeichers noch verändert, insbesondere erweitert werden, um beim Einbau in das Fahrzeug die individuelle Zuordnung von Energiespeicher und Sicherheitssystem oder die Autorisierung des Speichersystems für den Betrieb des angeschlossenen Sicherheitssystems anzugeben. Es ist auch möglich, die Codierung bei einer qualifizierten Überprüfung des Sicherheitssystems oder nach Eintreten von bestimmten Betriebszuständen des Speichersystems und/oder des Sicherheitssystem zu verändern.

Das Sicherheitssystem reagiert je nach dem, ob die Kennung des Energiespeichers diesen als kompatibel oder nicht kompatibel identifiziert. Beispielsweise kann im letzteren Falle eine Warnung erfolgen oder es kann der Betrieb der vom Sicherheitssystem gesicherten Einrichtung unterbunden werden.

Durch eine erfindungsgemäße Anordnung wird gewährleistet, daß ein vom Fahrzeughersteller vorgesehenes und zugelassenes Batteriesystem verwendet wird und beispielsweise eine Batterie von zu geringer Größe oder zu geringer Leistungsfähigkeit sicher erkannt wird.

Damit ist eine Prüfung der Batterie möglich, auch wenn diese von einem Laien zum Wechsel oder zur Nachladung ein- und ausgebaut wurde.

Darüber hinaus können Kriterien, wie Hersteller, Bauart, Alter, Ablauf von Gütekriterien wie Gebrauchsdauer und Betriebstemperatur, Termine für anstehende Überprüfung oder andere elektrische Eigenschaften codiert oder offen lesbar in dem mit der Batterie festverbundenen Kennungsträger gespeichert sein. Es können auch im Kennungsträger Informationen darüber enthalten sein, welche Sicherheitssysteme bestimmungsgemäß mit der elektrochemischen Energiespeicher betreibbar sind. Der elektrochemische Energiespeicher kann individuell qualifiziert werden für eine spezielle Anwendung. Diese Qualifizierung kann durch den Hersteller des Sicherheitssystems oder durch beispielsweise eine Vertragswerkstatt erfolgen. Nur wenn eine individuelle Batterie nach eingehender Prüfung für die spezielle Verwendung qualifiziert wurde, erhält sie eine entsprechende Kennung in ihrem Kennungsträger. Damit sind auch befristete Qualifizierungen mit der Pflicht zur erneuter Qualifizierung möglich, um eine ständige technische Überwachung bzw. Wartung des Fahrzeugs zu erreichen. Ergibt die Prüfung, daß die Qualifizierung nicht mehr vorhanden ist, so kann beispielsweise in einem Fahrzeug der Fahrer zunächst darüber ein Signal erhalten, oder es können die Betriebsmöglichkeiten eingeschränkt werden oder das Fahrzeug kann ganz stillgelegt werden.

## Patentansprüche

1. Anordnung zur Prüfung der Betriebssicherheit von Systemen, die einen elektrochemischen Energiespeicher enthalten, der zumindest zeitweise die elektrische Energie zur Durchführung eines Sicherungsvorgangs liefert, und der mit einem mit ihm fest verbundenen Kennungsträger versehen ist, über den im System die Kenngrößen und die Eignung des Energiespeichers überprüfbar sind, dadurch gekennzeichnet, daß der elektrische Energiespeicher in einem Fahrzeug angeordnet ist, und daß der Kennungsträger zumindest eine Information über das Ende der zulässigen Gebrauchsdauer des elektrochemischen Speichersystems und/oder einen Termin zur Überprüfung des elektrochemischen Speichersystems enthält.

2. Anordnung nach Anspruch 1, dadurch gekennzeichnet, daß der elektrochemische Energiespeicher zur Stromversorgung eines Bremssystems im Fahrzeug dient.

3. Anordnung nach Anspruch 1 oder 2, dadurch gekennzeichnet, daß der Kennungsträger ein elektronischer Speicherbaustein ist.

4. Anordnung nach einem der Ansprüche 1 bis 3, dadurch gekennzeichnet, daß der Kennungsträger eine Information enthält, die die Kompatibilität des elektrochemischen Energiespeichers mit dem Sicherheitssystem dokumentiert und die durch den Hersteller des Sicherheitssystems, insbesondere den Hersteller des Fahrzeugs, in den Kennungsträger eingebracht ist.

5. Anordnung nach einem der Ansprüche 1 bis 4, dadurch gekennzeichnet, daß die Kompatibilitätsinformation beim Einbau des elektrochemischen Speichersystems in ein Fahrzeug mit Sicherheitssystem erfolgt.

## Claims

1. Arrangement for testing the operational reliability of systems which contain an electrochemical energy storage means which, at least from time to time, supplies the electrical energy to carry out a safety-related operation and which is provided with a code carrier which is permanently connected to the said electrochemical energy storage means and via which, in the system, the characteristics and the suitability of the energy storage means can be checked, characterized in that the electrochemical energy storage means is arranged in a vehicle, and in that the code carrier contains at least one item of information about the end of the permissible period of use of the electrochemical storage system and/or a date for checking the electrochemical storage system.

2. Arrangement according to Claim 1, characterized in that the electrochemical energy storage means is used to supply power to a braking system in the vehicle.

3. Arrangement according to Claim 1 or 2, characterized in that the code carrier is an electronic memory module.

4. Arrangement according to one of Claims 1 to 3, characterized in that the code carrier contains an item of information which documents the compatibility of the electrochemical energy storage means with the safety system and which is introduced into the code carrier by the manufacturer of the safety system, in particular the manufacturer of the vehicle.

5. Arrangement according to one of Claims 1 to 4, characterized in that the compatibility information is provided when the electrochemical storage system is installed in a vehicle with a safety system.

## Revendications

1. Dispositif de contrôle de la sécurité de fonctionnement de systèmes comportant un accumulateur d'énergie électrochimique, qui fournit au moins en partie l'énergie électrique pour l'exécution d'une opération de sécurité et comporte un support d'identité relié solidairement à cet accumulateur d'énergie, pour vérifier les grandeurs caractéristiques du système et l'adéquation de l'accumulateur d'énergie,
caractérisé en ce que
l'accumulateur d'énergie électrique est monté dans un véhicule et le support d'identité comporte au moins une information relative à la fin de la durée d'utilisation autorisée du système accumulateur électrochimique et/ou un délai de contrôle du système accumulateur électrochimique.

2. Montage selon la revendication 1,
caractérisé en ce que
l'accumulateur d'énergie électrochimique assure l'alimentation électrique d'un système de frein du véhicule.

3. Montage selon la revendication 1 ou 2,
caractérisé en ce que
le support d'identité est un composant de mémoire électronique.

4. Montage selon les revendications 1 à 3,
caractérisé en ce que
le support d'identité contient une information qui documente la compatibilité de l'accumulateur d'énergie électrochimique avec le système de sécurité, et qui est installée par le fabricant du système de sécurité notamment le fabricant du véhicule dans le support caractéristique.

5. Montage selon l'une des revendications 1 à 4,
caractérisé en ce que
l'information de compatibilité se fait lors de l'installation du système accumulateur électrochimique dans un véhicule équipé d'un système de sécurité.
